# EUROPEAN PATENT SPECIFICATION

(11) **EP 3 253 701 B1**
(45) Date of publication and mention of the grant of the patent: **31.03.2021**
(21) Application number: 15881001.0
(22) Date of filing: 04.02.2015
(51) Int. Cl.: B66B 1/46, G06F 3/0488

(54) **ELEVATOR OPERATING PANEL COMPRISING TOUCH SCREEN**
BEDIENUNGSTAFEL FÜR AUFZÜGE MIT BERÜHRUNGSBILDSCHIRM
PANNEAU D'ACTIONNEMENT D'ASCENSEUR COMPRENANT UN ÉCRAN TACTILE

(43) Date of publication of application: 13.12.2017
(73) Proprietor: KONE Corporation, 00330 Helsinki (FI)
(72) Inventor: KOIVISTO, Ari, FI-00330 Helsinki (FI); AUVINEN, Juuso, FI-00330 Helsinki (FI); ELOMAA, Niko, FI-00330 Helsinki (FI); VUORENALA, Jere, FI-00330 Helsinki (FI)
(74) Representative: Kolster Oy Ab
(86) International application number: PCT/FI2015/050071
(87) International publication number: WO 2016/124810

(56) References cited:
- EP-A1- 1 785 385
- WO-A1-2012/143612
- WO-A1-2014/072588
- WO-A1-2014/086691
- CN-A- 101 992 979
- US-A1- 2014 014 444

## Description

### FIELD

The present invention relates to an elevator operating panel comprising a touch screen.

### BACKGROUND

Users can make elevator calls to destination floors via an operating panel installed to an elevator car. An elevator call to a wrong floor causes the elevator car to do an unnecessary stop which lowers the overall capacity of the system due to wasted time.

Present operating panels have physical keyboards which allow cancelling elevator calls. Elevators calls may be cancelled for example by pressing the same button again once, twice, three times, or a for long time period. However, the present methods to cancel elevator calls may vary between elevators and the user should be familiar with each elevator in order to know how to cancel the elevator call in a specific elevator. However, the user may be using a specific elevator for the first time or only occasionally, whereby the user may not be familiarized in cancelling an elevator call in the specific elevator he is currently using.

CN 101992979 discloses a solution in which a touch screen requires two separate sliding gestures, first a vertical one and then a horizontal one, wherein the direction of the vertical one indicating whether an uplink or downlink call is cancelled. US 2014/014444 discloses a solution in which a registered call may be removed by dragging the registration data to outside a display.

### BRIEF DESCRIPTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

Some embodiments provide cancelling elevator calls via a touch screen. The cancellation may be performed by a swiping gesture applied on the touch screen, whereby the cancellation may be intuitive to the users without extensive experience of using a particular elevator or studying operating instructions.

### BRIEF DESCRIPTION OF THE DRAWINGS

In the following the invention will be described in greater detail by means of preferred embodiments with reference to the attached drawings, in which
Figure 1 illustrates an example of an elevator arrangement according to an embodiment;
Figure 2 illustrates example states of a destination floor according to an embodiment;
Figure 3 illustrates an example of a method for cancelling an elevator call according to an embodiment of the invention;
Figures 4a, 4b, 4c and 4d illustrate examples of information displayed on an operating panel according to embodiments of the invention;
Figure 5 illustrates an example of a method for determining a cancellation gesture according to an embodiment of the invention;
Figure 6 illustrates a method for determining a cancellation gestureaccording to an embodiment of the invention; and
Figure 7 illustrates an example of a method for cancelling an elevator call to a destination floor controlled by an access control system.

### DETAILED DESCRIPTION OF THE INVENTION

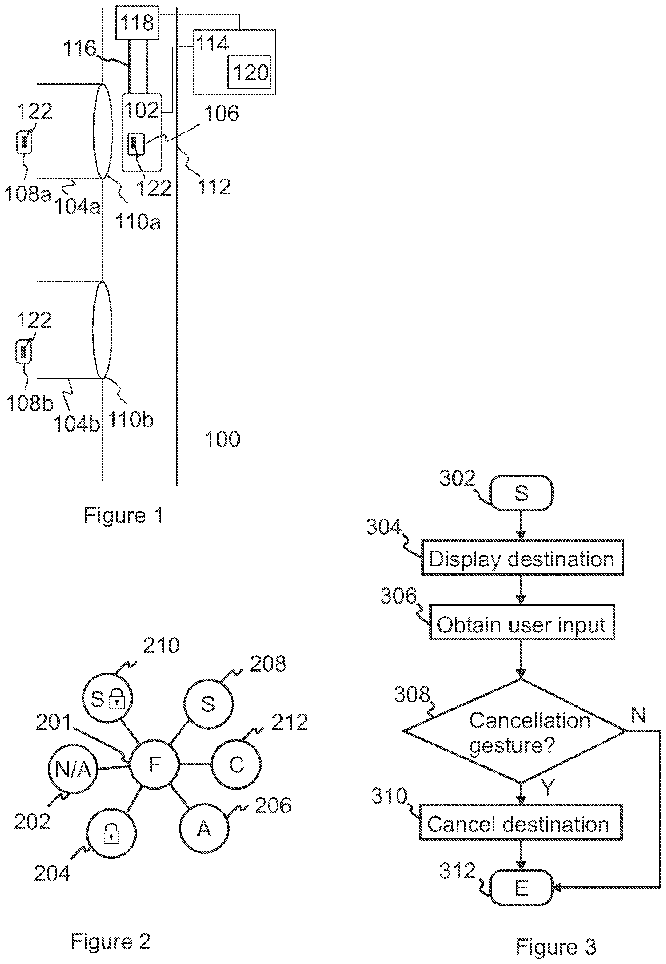

Figure 1 illustrates an example of an elevator arrangement 100 according to an embodiment. The elevator arrangement may comprise one or more elevator cars 102 movable between destination floors 104a, 104b that communicate traffic, e.g. people, to and from the elevator cars through doorways 110a, 110b. The elevator cars may supported by ropes 116 in hoistways 112 such that the elevator cars may be moved up and down the hoistways by hoisting machineries 118 connected to the ropes. The hoistways may be located in a single shaft or separate shafts. The doorway may comprise a door such that the doorway may be closed, when the elevator car is not stopped at the floor of the doorway, but for example moving between the floors or stopped to another floor.

Elevator operating panels 106, 108a, 108b may be installed to the floors or inside elevator cars (not shown) for example to a wall. An operating panel 106 installed inside the elevator car may be referred to as a Car Operating Panel (COP).

The operating panel may include a user interface providing both output of information to the user and input of information from the user to the touch screen and the elevator arrangement. The information output by the operating panel may comprise destination floor information, for example information indicating available destination floors, information indicating non-available destination floors and/or information indicating selected destination floors. When a destination floor is available, the user may select the destination floor for travelling to the destination floor using the elevator. On the other hand a non-available destination floor may not be selected by the user for travelling. The information indicating a destination floor may be a number, a letter or any other character, symbol, series of characters, series of symbols or their combinations that identify the destination floor from the other floors of the elevator arrangement. In one example the information indicating a destination floor comprises a name of the tenant located in the destination floor. The input information may comprise a selection of a destination floor and/or, a cancellation of a destination floor selection. The output information may be provided on a display and/or by a speaker, for example. The input information may be provided by a microphone, a keyboard and/or a button that may receive commands from the user over voice or touch of the user. The elevator car may be driven between the floors on the basis of an elevator call generated by a selection of a destination floor by the user and/or a cancellation of the elevator call obtained via the operating panel. The elevator arrangement may comprise one or more operating panels that each may be used to input and output information.

In an embodiment an operating panel may be a touch screen such that information may be displayed to the user and the user may input information using the operating panel. The touch screen provides that the operating panel may be used by gestures applied by the user to the touch screen similar to the present day mobile phones and tablet computer. In this way the use of the operating panel may be intuitive such that even users who have not used the operating panel earlier can use the features of the operating panel. Since the use of the operating panel may be intuitive, very little or no instructions on the use of the operating panel are needed. For example, printed instructions for using the operating panel such as "Press the Alarm in Case of Emergency Only" could be difficult to read in a crowded elevator car, due to the character set used in the instructions and/or the language used in the instructions. Therefore, the intuitive use of the operating panel provides that the features of the operating panel may be used also in scenarios, where instructions such as printed instructions could not be obtained by the users.

Preferably the touch screen is a multi-touch screen such that it may be operated using gestures that may be interpreted by the length of the gesture in time and/or displacement of the gesture on the touch screen. These gestures may include a swiping gesture, where a position on the screen touched by the user is moved while maintaining contact with the surface of the screen. The swiping gesture may be interpreted based on its duration and/or the start and end positions of the swiping gesture on the screen. The multi-touch screen provides that more complex instructions than a mere touch to a specific location of the screen may be recognized. In this way the use of the operating panel may be made even more intuitive to the user. Moreover, the multi-touch screen provides that the operations, for example selecting a destination floor or cancelling a destination floor, provided by the operating panel may be made simple since a more complex interpretation of the user's touch is facilitated.

A controller 114 may be connected to the elevator car and hoisting machinery 118 such that the controller may obtain information from the control panel and use the obtained information to perform operations on the destination floors. The controller may be a controller of an elevator group or a single elevator. The connection to the elevator car may comprise a connection to one or more units within the elevator car, for example the operating panel and an Access Control System (ACS) reader unit 122. The operations performed on the destination floors may comprise controlling the hoisting machinery to cause driving of the elevator car to a destination floor indicated by an elevator call, cancelling an elevator call and/or displaying information on a destination floor in the operating panel. In one example, the controller may send commands to the hoisting machinery to control driving of the elevator car. The information obtained from the operating panel may comprise an elevator call to a destination floor selected by the user via the operating panel and/or a cancellation of a previous elevator call caused by the user cancelling selection of a destination floor. The controller may maintain a schedule for driving to destination floors. The schedule may identify an order of the destination floors. The elevator car may be driven to the destination floors according to the order defined by the schedule. The schedule may be generated and updated on the basis of elevator calls and/or cancellation of elevator calls obtained from the operating panel.

In an embodiment an elevator arrangement comprises an access control system 120. The Access Control System (ACS) may provide authorization of one or more operations performed on a destination floor in the elevator arrangement of Figure 1.The operations may comprise one or more operations performed by the controller. Examples of the operations comprise driving an elevator car to a destination floor indicated by an elevator call, cancelling an elevator call and/or displaying information on a destination floor in an operating panel. An elevator call may be made to a destination floor controlled by the ACS if the elevator call to the destination floor is authorized by the ACS. On the other hand the ACS may provide authorization for cancelling an elevator call to the destination floor. The ACS may be included in the controller 114 or connected to the controller such that the controller may communicate with the ACS to request for the authorization. The operating panel may have an ACS reader unit 122 for reading access rights of the users. The access rights of the user may be used by the ACS to determine whether or not to authorize an operation. The access rights may define one or more destination floors that the user is allowed to access and thereby to cause elevator calls to the defined destination floors. The access rights may be distributed to users on machine-readable cards or electronic keys that may be read by the ACS reader for identifying the access rights of the users.

Connections between the ACS, operating panel, hoisting machinery and elevator car may be implemented by electrical connections that may be capable of communications data and/or messages between the connected devices. Examples of suitable connections are industrial buses and/or as Ethernet connections.

Figure 2 illustrates example states of a destination floor 201 according to an embodiment. The state of the destination floor may be maintained by in a controller of an elevator arrangement, for example in the elevator arrangement of Figure 1. Each destination floor in the elevator arrangement may have its own state. A change between states of the destination floor may be caused by an operation performed on the destination floor. Information indicating the destination floor and the state of the destination floor may be displayed on an operating panel, for example a touch screen. In this way the user may be informed about the state of the destination floor. The states may comprise: a destination floor not available 202, a destination floor available as controlled by as access control system 204, destination floor available 206, destination floor selected 208, destination floor selected and locked by access control system 210, and a destination floor cancelled 212. Each of the states may be displayed on the operating panel using information that identifies the state from the other states. In this way the current state of the destination floor state may be identified. In one example a graphical indication, for example a symbol representing a lock, corresponding to the state may be displayed in connection with the destination floor, e.g. a floor number. In this way the state of the destination floor may be indicated to the user. The lock symbol may be indicate that operations, e.g. making an elevator call to a destination floor selected by a user and/or cancelling an elevator call, performed on the destination floor are controlled by an ACS. Accordingly, changes between states of the destination floor such that either one or both of the states are controlled by the ACS, have to be authorized by the ACS. In one example the destination floor may be changed from the locked state, i.e. the destination floor available as controlled by an access control system 204, into the selected and locked state 210, when the selection of the destination floor by the user via the operating panel is authorized by the ACS. On the other hand a change of the state between the destination floor available 206 and the destination floor selected 208 may not need authorization from the ACS.

Figure 3 illustrates an example of a method for cancelling an elevator call according to an embodiment. The method may be performed in an elevator arrangement, for example by an elevator operating panel comprising a touch screen for displaying destination floor information and receiving input from a user. The method may start 302, when the operating panel is deployed and operational in the elevator arrangement.

A selection of a destination floor may be obtained 304 from a user. The selection of the destination floor may cause an operation to be performed on the destination floor. The operation may be an elevator call to the selected destination floor. The elevator call may cause the elevator car to be driven to the destination floor. A schedule may be maintained for driving to destination floors. The schedule may be generated and updated on the basis of elevator calls and/or cancellation of elevator calls. In one example, the elevator car may be driven directly to the destination call indicated by the elevator call or the destination floor indicated by the elevator call may be scheduled such that the elevator car is driven to the destination floor after a delay, during which the elevator car may be driven to zero or more other floors.

The selected destination floor may be displayed 304 on the touch screen. In this way the user may be informed about the selected destination floor and that an elevator call has been generated to the selected destination floor.

A swiping gesture may be obtained 306 from the user. The touch applied by the user to the touch screen may be interpreted to determine that the touch is a swiping gesture.

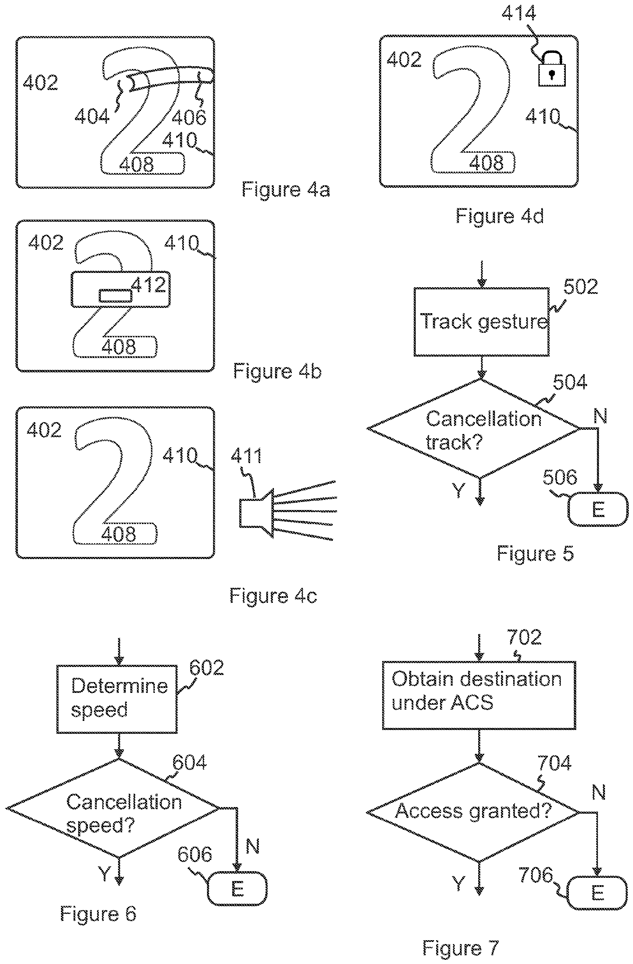

The elevator call may be cancelled 310 when 308 the swiping gesture is a cancellation gesture. The cancellation gesture may be a gesture applied to a selected destination floor displayed on the touch screen. The swiping gesture may be a cancellation gesture when at least a part of the swiping gesture overlaps the displayed destination floor. Now referring to Figure 4a, where a destination floor 408 selected by a user is displayed on an operating panel, e.g. a touch screen, after an elevator call has been made to the destination floor. The swiping gesture may have a start point 404 and end point 406 on the touch screen 402, whereby at least one or both of the start point and the end point may be located on the displayed destination floor 408. The swiping gesture may also have a path between the start point and end point. The user's touch may be maintained from the start point to the end point. The start point and end point and the path may all overlap the destination floor. In an embodiment, the end point may be located at an edge 410 of the touch screen. The cancellation gesture may cause cancelling the elevator call 310. The cancelling may comprise sending a cancellation message to a controller of the elevator arrangement. The cancellation message may indicate the destination floor displayed on the touch screen and selected by the user. The reception of the cancellation message may cause the controller to drive the elevator car to some other destination floor instead of the cancelled destination floor. The method ends 312 after the elevator call has been cancelled. When the swiping gesture is not a cancellation gesture, the gesture may not cause a cancellation of the elevator call and the method may end 312.

Figures 4a, 4b, 4c and 4d illustrate examples of information displayed on an operating panel 402 according to embodiments of the invention. The operating panel is a touch screen. The operating panel may be the operating panel in the elevator arrangement of Figure 1. A destination floor 408 selected by a user is displayed on the touch screen after an elevator call has been made to the destination floor. Preferably the displayed information representing the destination floor fits within edges 410 of the display area.

Figure 4a illustrates an example of a cancellation gesture on the touch screen. An example of a method for determining a cancellation gesture according to an embodiment is now described with reference to Figures 4a and 5. A swiping gesture may be obtained from the user, for example as described in step 306 in Figure 3. The swiping gesture may be obtained by tracking 502 the swiping gesture for determining at least a start point 404 and an end point 406 of the gesture. The start point and end points define positions on the touch screen. The swiping gesture may be determined as a cancellation gesture, when the start point of the gesture is at the selected destination floor 408 on the touch screen and the end point of the gesture is away from the start point, for example at the edge 410 of the touch screen. When 504 the tracked swiping gesture is determined as the cancellation gesture, the elevator call may be cancelled, for example as described in step 310 in Figure 3.

The start point may be an area on the touch screen, which the user touches the first. The end point may be an area on the touch screen that the user touches the last. A path between the start point and end point may be formed by the user maintaining the touch to the touch screen between the start point and end point. Accordingly, the swiping gesture may be defined by a start point and end point connected by a path formed by a movement of the area of contact that connects user and the touch screen. When 504 the tracked swiping gesture matches a cancellation gesture, the Similarly, the cancellation gesture may be defined by areas of the touch screen, including a start point, end point and/or a path between the start point and end point. There may be or more cancellation gestures. For example, start points may be defined at the selected destination floor displayed on the touch screen and end points may be defined to at least two, three or four edges of the touch screen such that a swiping gesture from the start point towards the edges may be determined as a cancellation gesture. A touch screen having a substantially rectangular display area may therefore have one, two, three, four all edges acting as end points for the cancellation gesture. In this way, it may be equally intuitive to cancel an elevator call, for left-handed and right-handed people, for short and tall people and even if the touch screen is difficult to reach in a crowded place, for example inside an elevator car. If 504 the tracked swiping gesture is not determined as a cancellation gesture, the gesture may not cause a cancellation of the elevator call and the method may end 506.

An example of a method for determining a cancellation gesture according to an embodiment of the invention is now described with reference to Figures 4a and 6. A swiping gesture is obtained from the user, for example as described in step 306 in Figure 3. The swiping gesture is obtained by tracking 602 the swiping gesture for determining a speed of the swiping gesture. The elevator call is cancelled on the basis of the swiping gesture, when 604 the speed exceeds a threshold for the speed for cancelling the elevator call. The speed may be determined on the basis of measuring the time between a start point and an end point of the gesture. When 604 the speed of the swiping gesture exceeds the threshold for the speed, the swiping gesture is determined as a cancellation gesture and the elevator call is cancelled, for example as described in step 310 in Figure 3. The cancellation speed may a predefined speed value or a range of speed values. If the tracked swiping gesture is not determined as a cancellation gesture, for example the speed does not exceed the threshold for the speed, the gesture does not cause a cancellation of the elevator call and the method ends 606.

It should be appreciated that the speed, start point and end points of the gesture may be used separately or in any combination to determine a swiping gesture.

In an embodiment, a cancellation of an elevator call on the basis of a cancellation gesture may be confirmed by displaying a dialog element on an operating panel and a selection of the dialog element by the user may cause cancellation of the elevator call. The operating panel may be for example a touch screen operating panel in an elevator arrangement of Figure 1. Figure 4b illustrates an example of a dialog element displayed in the touch screen. The dialog element may be a graphical object for example a box. After the swiping gesture has been determined as a cancellation gesture, for example as described in the methods of Figure 3, 4 or 5, the dialog element 412 may be displayed for confirming the cancellation of the elevator call. The user may confirm the cancellation of the elevator call to the displayed destination floor 408 by selecting the dialog element. In a touch screen operating panel the dialog element may be selected by the user touching the dialog element. The dialog element may have a specific selection area that when touched by the user causes confirmation of the cancellation of the elevator call. The dialog element may have also a specific selection area for confirming the cancellation of the elevator call. The cancellation of the cancellation of the elevator call may take place, when the user touches the specific selection area for confirming the cancellation. The area of the touch screen outside the dialog element may additionally or instead of the specific selection area inside the dialog element serve for confirming the cancellation. The dialog element may include text that assists the user in interpreting the dialog element. The text may be for example "Please confirm cancellation of the elevator call by touching this box". If the cancellation of the elevator call is confirmed, the elevator call may be cancelled, for example as described in step 310 in Figure 3.

In an embodiment a cancellation of an elevator call on the basis of a cancellation gesture may be confirmed by a dialog element 412 displayed for a predefined time period on an operating panel. The operating panel may be for example a touch screen operating panel in an elevator arrangement of Figure 1. The cancellation may be performed only during the predefined time period during which the dialog element may be displayed on the touch screen. The confirmation of the cancellation may be obtained from the user as a touch as described above. After the time period has lapsed without a confirmation from the user, the elevator call is not cancelled. If the confirmation for cancelling the elevator call is obtained from the user during the time period, the elevator call may be cancelled as described in step 310 in Figure 3 for example.

In an embodiment, a sound may be played for confirming a cancellation of the elevator. Figure 4c illustrates an example of a sound 411 played for confirming the cancellation of the elevator call. The operating panel may comprise a speaker for playing the sound. It should be appreciated that the speaker may be installed also to other locations in the elevator arrangement such that the user may hear the sound. However, the operating panel may be preferred as a location for the speaker since the sound relates to the operation of the operating panel. After the elevator call is cancelled, for example as described in step 310 in Figure 3, a sound 411 may be output such that the user may obtain an audible confirmation of the cancellation of the elevator call. The sound may be output after the user has confirmed the cancellation by the selection of the dialog element, for example as described in Figure 4b. The sound may be a tune, a tone and/or speech. The sound preferably indicates the user a success of the cancellation of the elevator call. Suitable sounds may be determined on the basis of user surveys, for example. When the sound is speech, the speech may comprise recorded human speech or synthesised speech. The speech may comprise for example an audio message, where the word "Cancelled" is spoken out loud.

In an embodiment an elevator call to a destination floor controlled by an ACS may be cancelled. An example of a method for cancelling an elevator call to a destination floor controlled by an ACS is now described with reference to Figures 4d and Figure 7. Figure 4d illustrates an example of a destination floor 408 locked by an ACS. The destination floor may have been selected as authorized by the ACS. After the destination floor has been selected the destination floor may be locked and for example in the state destination floor selected and locked by access control system 210 in Figure 2. A graphical indication, for example a lock 414, may be displayed on the touch screen for indicating that the destination floor is locked by the ACS. A swiping gesture may be obtained 702 from the user, for example as described in step 306 in Figure 3. The swiping gesture may be a swiping gesture applied by the user on the destination floor that is locked by the ACS. The swiping gesture may be tracked as described for example in steps 502 and 602 in Figures 5 and 6. The destination floor may be identified to be controlled by the ACS, after which the ACS may be requested to authorize the operation, e.g. cancelling the elevator call, to the destination floor. The authorization of the operation may be performed by the user identifying his/her rights to the ACS by an access card swiped through a card reader serving as an ACS reader unit. The identification may be performed in connection, for example before or after, with the swiping gesture applied on the touch screen.

If 704 the ACS authorizes access to the destination floor, the elevator call may be cancelled as authorized by the ACS. The cancellation of the elevator call may be performed as described in step 310 in Figure 3. On the other hand if the ACS does not authorize the access to the destination floor, the method may end 706 without cancelling the elevator call to the locked destination floor.

In an embodiment there is provided a computer program comprising computer program code for execution on a computer to cause a method according to an embodiment. The computer program may be embodied on a computer - readable storage medium.

In an embodiment there is provided a computer program product for a computer, comprising a computer program according to an embodiment.

In an embodiment, an apparatus, for example operating panel, a touch screen, controller or elevator arrangement described in an embodiment, may comprise at least one processor, memory and a computer program code that form processing means for carrying out an embodiment.

Embodiments as described may also be carried out in the form of a computer process defined by a computer program. The computer program may be in source code form, object code form, or in some intermediate form, and it may be stored in some sort of carrier, which may be any entity or device capable of carrying the program. For example, the computer program may be stored on a computer -readable storage medium. The computer -readable storage medium may be a computer program distribution medium readable by a computer or a processor. The computer -readable storage medium may be, for example but not limited to, a record medium, computer memory, read-only memory, electrical carrier signal, telecommunications signal, and software distribution package, for example.

The techniques described herein may be implemented by various means so that an apparatus implementing one or more functions of an operating panel, a touch screen, controller or elevator arrangement described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. For a firmware or software, implementation can be through modules (e.g., procedures, functions, and so on) that perform the functions described herein. The computer program codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

Thus, according to an embodiment, the apparatus such as an operating panel, a touch screen, controller or elevator arrangement may comprise processing means configured to carry out any of the embodiments of Figures 3, 4a, 4b, 4c, 4d, 5, 6 and 7.

Implementations of the operating panel, touch screen, controller and elevator arrangement described in the above embodiments may vary. For example, one or more functions performed by any of the operating panel, touch screen and controller may be implemented in a single apparatus that performs functions of more than one of the operating panel, touch screen and controller. On the other hand each function may be implemented in a dedicated apparatus, for example a processing means configured to carry out a function.

A skilled person may acknowledge advantages provided by the above described features and embodiments and may combine them in order to implement an operating panel, a touch screen, controller or elevator arrangement according to the invention.

It will be obvious to a person skilled in the art that, as the technology advances, the inventive concept can be implemented in various ways. The invention and its embodiments are not limited to the examples described above but may vary within the scope of the claims.

## Claims

1. A method for an elevator operating panel comprising a touch screen for displaying (304) destination floor information and receiving input from a user, the method comprising:
obtaining (306) a selection of a destination floor for an elevator call from the user;
displaying the selected destination floor;
obtaining a swiping gesture from the user **characterized by**
tracking (308, 502) the swiping gesture for determining at least a start point (404) of the gesture, an end point (406) of the gesture, and a speed (602) of the gesture; and
cancelling (310) the elevator call when the start point of the gesture is at the selected destination floor on the touch screen, the end point of the gesture is away from the start point and the speed of the gesture exceeds a threshold for the speed for cancelling the elevator call.

2. A method according to claim 1, wherein the end point may arranged at two, three or four edges (410) of the touch screen.

3. A method according to any one of the preceding claims, wherein the selected destination floor is controlled by an access control system and the elevator call to the destination floor is cancelled as authorized (704) by the access control system.

4. A method according to any one of the preceding claims, wherein a dialog element is displayed for confirming a cancellation of the elevator call and a selection of the dialog element by the user causes cancellation of the elevator call.

5. A method according to any one of the preceding claims, wherein a dialog element is displayed for a predefined time period for cancelling the elevator call.

6. A method according to any one of the preceding claims, wherein a sound is played for confirming a cancellation of the elevator call.

7. A method according to any one of the preceding claims, wherein
a destination floor has a plurality of states, and information indicating the destination floor and the state of the destination floor is displayed on the touch screen, wherein the states comprise: destination floor not available, destination floor available as controlled by an access control system, destination floor available, destination floor selected, destination floor selected and locked by access control system.

8. An elevator operating panel comprising a touch screen for displaying destination floor information and receiving input from a user, wherein the elevator operating panel is configured to cause execution of a method according to any one of claims 1 to 7.

9. An elevator arrangement comprising an elevator operating panel according to claim 8 installed to at least one elevator car for making elevator calls to destination floors.

10. A computer program comprising computer program code comprising instructions to cause the elevator operating panel according to claim 8 to execute the method according to any one of claims 1 to 7.

11. A computer program product comprising a computer program according to claim 10.

## Patentansprüche

1. Verfahren für eine Bedientafel für Aufzüge mit einem Berührungsbildschirm zum Anzeigen (304) von Informationen zum Zielstockwerk und Empfangen von Eingaben von einem Benutzer, wobei das Verfahren umfasst:
Erhalten (306) einer Auswahl eines Zielstockwerks für einen Aufzugruf von dem Benutzer;
Anzeigen des ausgewählten Zielstockwerks;
Erhalten einer wischenden Geste von dem Benutzer;
**gekennzeichnet durch**
Verfolgen (308, 502) der wischenden Geste zum Ermitteln mindestens eines Anfangspunkts (404) der Geste, eines Endpunkts (406) der Geste und einer Geschwindigkeit (602) der Geste; und
Löschen (310) des Aufzugrufs, wenn sich der Startpunkt der Geste an dem ausgewählten Zielstockwerk auf dem Berührungsbildschirm befindet, der Endpunkt der Geste von dem Startpunkt entfernt ist und die Geschwindigkeit der Geste einen Schwellenwert für die Geschwindigkeit zum Löschen des Aufzugsrufs überschreitet.

2. Verfahren nach Anspruch 1, wobei der Endpunkt an zwei, drei oder vier Rändern (410) des Berührungsbildschirms liegen kann.

3. Verfahren nach einem der vorstehenden Ansprüche, wobei das ausgewählte Zielstockwerk durch eine Zugangssteuerung gesteuert wird und der Aufzugruf für das Zielstockwerk nach Autorisierung (704) durch die Zugangssteuerung gelöscht wird.

4. Verfahren nach einem der vorstehenden Ansprüche, wobei ein Dialogelement zum Bestätigen einer Löschung des Aufzugrufs angezeigt wird und eine Auswahl des Dialogelements durch den Benutzer die Löschung des Aufzugrufs bewirkt.

5. Verfahren nach einem der vorstehenden Ansprüche, wobei ein Dialogelement für eine vorgegebene Zeitspanne zum Löschen des Aufzugrufs angezeigt wird.

6. Verfahren nach einem der vorstehenden Ansprüche, wobei ein Ton zum Bestätigen einer Löschung des Aufzugrufs abgespielt wird.

7. Verfahren nach einem der vorstehenden Ansprüche, wobei
ein Zielstockwerk eine Vielzahl von Status hat, und Informationen, die das Zielstockwerk und den Status des Zielstockwerks angeben, auf dem Berührungsbildschirm angezeigt werden, wobei die Status umfassen: Zielstockwerk nicht verfügbar, Zielstockwerk mit Steuerung durch eine Zugangssteuerung verfügbar, Zielstockwerk verfügbar, Zielstockwerk ausgewählt, Zielstockwerk ausgewählt und von der Zugangssteuerung gesperrt.

8. Bedientafel für Aufzüge mit einem Berührungsbildschirm zum Anzeigen von Informationen zum Zielstockwerk und Empfangen von Eingaben von einem Benutzer, wobei die Bedientafel für Aufzüge dafür konfiguriert ist, die Ausführung eines Verfahrens nach einem der Ansprüche 1 bis 7 zu bewirken.

9. Aufzugsanordnung mit einer Bedientafel für Aufzüge nach Anspruch 8, die in zumindest einer Aufzugskabine installiert ist, zur Durchführung von Aufzugrufen für Zielstockwerke.

10. Computerprogramm, das einen Computerprogrammcode mit Befehlen umfasst, um die Bedientafel für Aufzüge nach Anspruch 8 zu veranlassen, das Verfahren nach einem der Ansprüche 1 bis 7 auszuführen.

11. Computerprogrammprodukt mit einem Computerprogramm nach Anspruch 10.

## Revendications

1. Procédé pour panneau de commande d'ascenseur comprenant un écran tactile destiné à afficher (304) des informations sur un étage de destination et à recevoir une entrée d'un utilisateur, le procédé comprenant les étapes suivantes :
obtenir (306) une sélection d'étage de destination pour un appel d'ascenseur de l'utilisateur ;
afficher l'étage de destination sélectionné ;
obtenir un geste de balayage de l'utilisateur ;
**caractérisé par** les étapes suivantes :
suivre (308, 502) le geste de balayage pour déterminer au moins un point de départ (404) du geste, un point d'arrivée (406) du geste, et une vitesse (602) du geste ; et
annuler (310) l'appel d'ascenseur lorsque le point de départ du geste se situe au niveau de l'étage de destination sélectionné sur l'écran tactile, le point d'arrivée du geste se situe à distance du point de départ et la vitesse du geste dépasse un seuil de vitesse pour annuler l'appel d'ascenseur.

2. Procédé selon la revendication 1, dans lequel le point d'arrivée peut être placé au niveau de deux, trois ou quatre bords (410) de l'écran tactile.

3. Procédé selon l'une quelconque des revendications précédentes, dans lequel l'étage de destination sélectionné est contrôlé par un système de contrôle d'accès et l'appel d'ascenseur vers l'étage de destination est annulé suivant autorisation (704) du système de contrôle d'accès.

4. Procédé selon l'une quelconque des revendications précédentes, dans lequel un élément de dialogue est affiché pour confirmer une annulation de l'appel d'ascenseur et une sélection de l'élément de dialogue par l'utilisateur provoque l'annulation de l'appel d'ascenseur.

5. Procédé selon l'une quelconque des revendications précédentes, dans lequel un élément de dialogue est affiché pendant une période de temps prédéfinie pour annuler l'appel d'ascenseur.

6. Procédé selon l'une quelconque des revendications précédentes, dans lequel un son est émis pour confirmer une annulation de l'appel d'ascenseur.

7. Procédé selon l'une quelconque des revendications précédentes, dans lequel :
un étage de destination a une pluralité d'états, et des informations indiquant l'étage de destination et l'état de l'étage de destination sont affichées sur l'écran tactile, dans lequel les états comprennent : étage de destination non disponible, étage de destination disponible suivant contrôle d'un système de contrôle d'accès, étage de destination disponible, étage de destination sélectionné, étage de destination sélectionné et verrouillé par système de contrôle d'accès.

8. Panneau de commande d'ascenseur comprenant un écran tactile destiné à afficher des informations sur un étage de destination et à recevoir une entrée d'un utilisateur, dans lequel le panneau de commande d'ascenseur est conçu pour provoquer l'exécution d'un procédé selon l'une quelconque des revendications 1 à 7.

9. Agencement d'ascenseur comprenant un panneau de commande d'ascenseur selon la revendication 8, installé sur au moins une cabine d'ascenseur pour effectuer des appels d'ascenseur vers des étages de destination.

10. Programme informatique comprenant un code de programme informatique comprenant des instructions pour faire exécuter au panneau de commande d'ascenseur selon la revendication 8, le procédé selon l'une quelconque des revendications 1 à 7.

11. Produit-programme informatique comprenant un programme informatique selon la revendication 10.
